# EUROPÄISCHE PATENTSCHRIFT

(11) **EP 0 906 370 B1**
(45) Veröffentlichungstag und Bekanntmachung des Hinweises auf die Patenterteilung: **07.03.2001**
(21) Anmeldenummer: 97923863.1
(22) Anmeldetag: 09.05.1997
(51) Int. Cl.: C09B 23/04, C09B 55/00, B41M 5/38

(54) **PYRIDONFARBSTOFFE**
PYRIDONE COLORANTS
COLORANTS A BASE DE PYRIDONE

(30) Priorität: 24.05.1996 DE 19621026
(43) Veröffentlichungstag der Anmeldung: 07.04.1999
(73) Patentinhaber: BASF AKTIENGESELLSCHAFT, 67056 Ludwigshafen (DE)
(72) Erfinder: ETZBACH, Karl-Heinz, D-67227 Frankenthal (DE); SENS, Rüdiger, D-68165 Mannheim (DE)
(86) Internationale Anmeldenummer: EP9702392
(87) Internationale Veröffentlichungsnummer: WO9745491

(56) Entgegenhaltungen:
- EP-A- 0 416 434
- EP-A- 0 454 049
- EP-A- 0 680 834
- DE-A- 4 344 116
- JP-A- 63 247 092

## Beschreibung

Die vorliegende Erfindung betrifft neue Pyridonfarbstoffe der Formel I 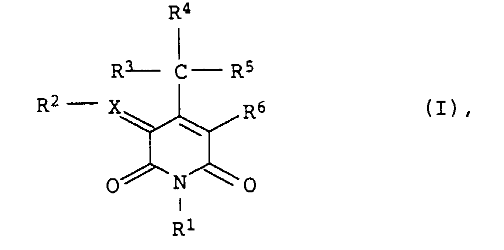 in der
- X: CH,
- R¹: C₁-C₂₀-Alkyl, das gegebenenfalls substituiert ist und durch 1 bis 4 Sauerstoffatome in Etherfunktion unterbrochen sein kann, oder gegebenenfalls substituiertes Phenyl,
- R²: einen 5- oder 6-gliedrigen carbocyclischen oder heterocyclischen Rest, der benzoanelliert sein kann,
- R³: Wasserstoff oder C₁-C₄-Alkyl,
- R⁴: Wasserstoff oder C₁-C₄-Alkyl
- R⁵: C₁-C₈-Alkyl, das gegebenenfalls durch 1 oder 2 Sauerstoffatome in Etherfunktion unterbrochen ist und durch Phenyl oder Hydroxy substituiert sein kann, oder gegebenenfalls substituiertes Phenyl und
- R⁶: Cyano, Carbamoyl, Carboxyl, C₁-C₄-Alkoxycarbonyl oder C₁-C₄-Alkanoyl bedeuten,
ein Verfahren zum thermischen Transfer dieser Farbstoffe sowie ihre Verwendung zum Färben oder Bedrucken von synthetischen Materialien.

Aus der US-A-5 079 365 sind Pyridonfarbstoffe bekannt, die in Ringposition 4 des Pyridinrings eine Methylgruppe tragen.

Weiterhin beschreiben die EP-A-680 834 und die DE-A-4 344 116 Pyridonmethinfarbstoffe mit Thiazol- und Thiophenresten.

Aufgabe der vorliegenden Erfindung war es nun, neue Pyridonfarbstoffe mit anderer chemischer Struktur und vorteilhaften Eigenschaften bereitzustellen.

Demgemäß wurden die eingangs näher bezeichneten Pyridonfarbstoffe der Formel I gefunden.

R² stellt einen 5- oder 6-gliedrigen carbocyclischen oder heterocyclischen Rest dar, der gegebenenfalls substituiert ist und benzoanelliert sein kann.

Reste R² können sich z.B. von Komponenten aus der Benzol-, Indol-, Chinolin-, Naphthalin-, Pyrrol-, Thiazol-, Benzimidazol-, Benzthiazol-, Thiophen- oder Diaminopyridinreihe ableiten.

Wichtige Reste R² sind z.B. solche der Formeln IIa bis IIj 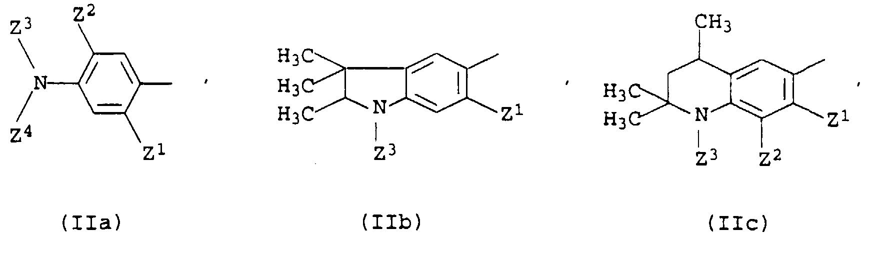 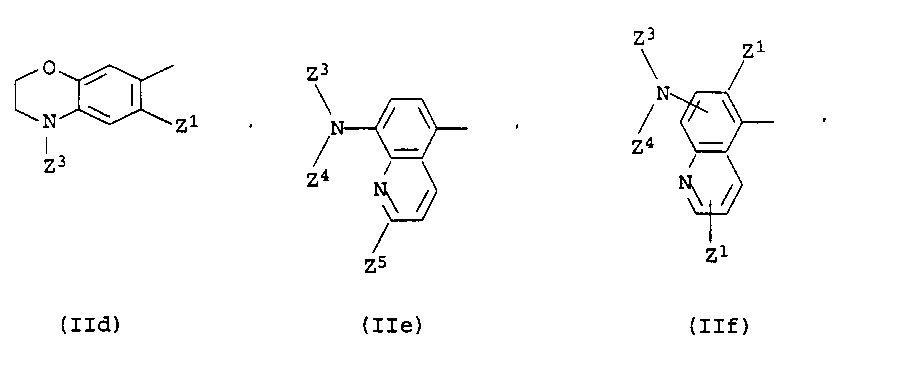 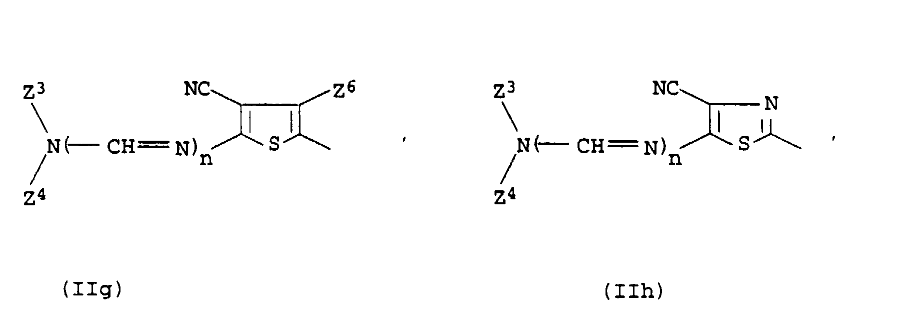 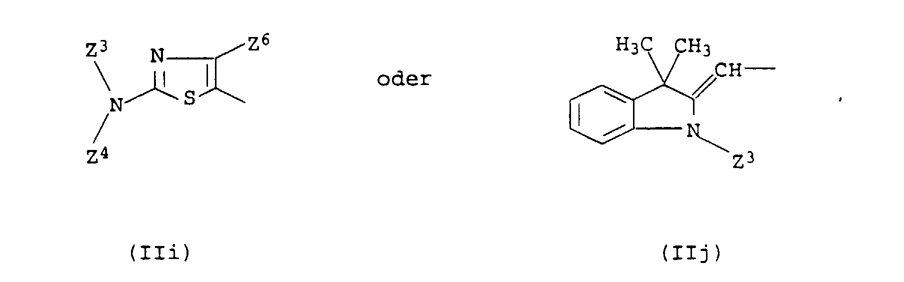 worin
- n: für 0 oder 1,
- Z¹: für Wasserstoff, C₁-C₈-Alkyl, das gegebenenfalls durch 1 oder 2 Sauerstoffatome in Etherfunktion unterbrochen ist, Hydroxy, C₁-C₄-Alkoxy, insbesondere Methoxy oder Ethoxy, Formylamino, C₁-C₄-Alkylsulfonylamino, C₁-C₄-Mono- oder Dialkylaminosulfonylamino oder den Rest -NHCOZ⁷ oder -NHCO₂Z⁷, wobei Z⁷ die Bedeutung von Phenyl, Benzyl, Tolyl oder C₁-C₈-Alkyl, das gegebenenfalls durch 1 oder 2 Sauerstoffatome in Etherfunktion unterbrochen ist, besitzt,
- Z²: für Wasserstoff, C₁-C₄-Alkyl, insbesondere Methyl, oder C₁-C₄-Alkoxy, insbesondere Methoxy oder Ethoxy,
- Z³: und Z⁴ unabhängig voneinander jeweils für Wasserstoff, C₁-C₈-Alkyl, das gegebenenfalls substituiert ist und durch 1 oder 2 Sauerstoffatome in Etherfunktion unterbrochen sein kann, C₃-C₄-Alkenyl, C₅-C₇-Cycloalkyl, gegebenenfalls substituiertes Phenyl oder zusammen mit dem sie verbindenden Stickstoffatom für einen 5- oder 6-gliedrigen gesättigten heterocyclischen Rest, der gegebenenfalls weitere Heteroatome enthält,
- Z⁵: für Wasserstoff oder C₁-C₄-Alkyl, insbesondere Methyl, und
- Z⁶: für Wasserstoff, Halogen, C₁-C₈-Alkyl, gegebenenfalls substituiertes Phenyl, gegebenenfalls substituiertes Benzyl, Cyclohexyl, Thienyl, Hydroxy, C₁-C₄-Alkoxy, C₁-C₄-Alkylthio oder C₁-C₈-Monoalkylamino stehen.

Alle in den hier genannten Formeln auftretenden Alkyl- und Alkenylgruppen können sowohl geradkettig als auch verzweigt sein.

Wenn in den hier genannten Formeln substituierte Alkylreste auftreten, so können als Substituenten z.B. gegebenenfalls substituiertes Phenyl, gegebenenfalls substituiertes Phenoxy, Carboxyl, C₁-C₂₀-Alkoxycarbonyl, dessen Alkylkette gegebenenfalls durch 1 bis 4 Sauerstoffatome in Etherfunktion unterbrochen und durch Phenyl oder Phenoxy substituiert sein kann, Hydroxy, Halogen, Cyano, C₁-C₈-Alkanoyloxy, C₁-C₈-Alkylaminocarbonyloxy oder C₁-C₈-Alkoxycarbonyloxy, wobei in den letzten drei Fällen die Alkoxygruppe durch Phenyl oder C₁-C₄-Alkoxy substituiert sein kann, in Betracht kommen. Die Alkylreste weisen dabei in der Regel 1 bis 3 Substituenten auf.

Wenn in den hier genannten Formeln Alkylreste auftreten, die durch Sauerstoffatome in Etherfunktion unterbrochen sind, so sind solche Alkylreste bevorzugt, die durch 1 oder 2 Sauerstoffatome in Etherfunktion unterbrochen sind.

Wenn in den hier genannten Formeln substituierte Phenyl- oder Thienylreste auftreten, so können als Substituenten z.B. C₁-C₄-Alkyl, Trifluormethyl, C₁-C₄-Alkoxy, Halogen, Nitro oder Carboxyl in Betracht kommen. Die Phenyl- oder Thienylreste weisen dabei in der Regel 1 bis 3 Substituenten auf.

Geeignete Reste R¹, R³, R⁴, R⁵, Z¹, Z², Z³, Z⁴, Z⁵, Z⁶ und Z⁷ sind, ebenso wie die unten genannten Rest L² und L³, z.B. Methyl, Ethyl, Propyl, Isopropyl, Butyl, Isobutyl, sec-Butyl oder tert-Butyl.

Reste R¹, R⁵, Z¹, Z³, Z⁴, Z⁶ und Z⁷ sind weiterhin z.B. Pentyl, Isopentyl, Neopentyl, tert-Pentyl, Hexyl, 2-Methylpentyl, Heptyl, Octyl, 2-Ethylhexyl oder Isooctyl.

Reste R¹ sind weiterhin z.B. Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl oder Eicosyl. (Die Bezeichnungen Isooctyl, Isononyl, Isodecyl und Isotridecyl sind Trivialbezeichnungen und stammen von den nach der Oxosynthese erhaltenen Alkoholen (vgl. dazu Ullmann's Encyclopedia of Industrial Chemistry, 5th Edition, Vol. A1, Seiten 290 bis 293, sowie Vol. A 10, Seiten 284 und 285)).

Reste R¹, R⁵, Z¹, Z³, Z⁴ und Z⁷ sind weiterhin z.B. 2-Methoxyethyl, 2-Ethoxyethyl, 2-Propoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, oder 4,8-Dioxadecyl.

Reste R¹ sind weiterhin z.B. 3,6,9-Trioxadecyl, 3,6,9-Trioxaundecyl, 3,6,9,12-Tetraoxatridecyl oder 3,6,9,12-Tetraoxatetradecyl.

Reste R¹, R⁵, Z³, Z⁴ und Z⁶ sind weiterhin z.B. Phenyl, 2-, 3- oder 4-Methylphenyl, 2-, 3- oder 4-Ethylphenyl, 2-, 3- oder 4-Propylphenyl, 2-, 3-oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl, 2,4-Dimethoxyphenyl, 2-, 3- oder 4-Fluorphenyl, 2-, 3- oder 4-Chlorphenyl, 2-, 3- oder 4-Trifluormethylphenyl, 2-, 3- oder 4-Nitrophenyl oder 2-, 3- oder 4-Carboxylphenyl.

Reste R¹, Z³ und Z⁴ sind weiterhin z.B. 2-Carboxyethyl, 2-Methoxycarbonylethyl, Benzyl, 1- oder 2-Phenylethyl, 2-, 3- oder 4-Methylbenzyl, 2-, 3- oder 4-Methoxybenzyl, 2-, 3- oder 4-Chlorbenzyl, 2-, 3- oder 4-Nitrobenzyl, 3-Benzyloxypropyl, Phenoxymethyl, 6-Phenoxy-4-oxahexyl, 8-Phenoxy-4-oxaoctyl, 2-Hydroxy-ethyl, 2- oder 3-Hydroxypropyl, Fluormethyl, Chlormethyl, Difluormethyl, Dichlormethyl, Trifluormethyl, Trichlormethyl, 2-Fluorethyl, 2-Chlorethyl, 2,2,2-Trifluormethyl, Pentafluorethyl, Heptafluorpropyl, 2-Cyanoethyl, 2- oder 3-Cyanopropyl, 2-Acetyl-oxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl, 2-Methylaminocarbonyloxyethyl, 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2-oder 3-Butoxycarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy)ethyl oder 2- oder 3-(2-Ethoxyethoxycarbonyloxy)propyl.

Reste R⁵ sind weiterhin z.B. Methoxymethyl, Ethoxymethyl, Propoxymethyl, Butoxymethyl, Benzyl, 1- oder 2-Phenylethyl, Hydroxymethyl, 1- oder 2-Hydroxyethyl, 1-, 2- oder 3-Hydroxypropyl oder 4-Hydroxy-2-oxabutyl.

Reste Z³ und Z⁴ sind weiterhin z.B. Cyclopentyl, Methylcyclopentyl, Cyclohexyl, Methylcyclohexyl, Cycloheptyl, Allyl oder Methallyl.

Reste Z¹ sind z.B. Methylsulfonylamino, Ethylsulfonylamino, Propylsulfonylamino, Isopropylsulfonylamino, Butylsulfonylamino, Mono- oder Dimethylaminosulfonylamino, Mono- oder Diethylaminosulfonylamino, Mono- oder Dipropylaminosulfonylamino, Mono- oder Diisopropylaminosulfonylamino, Mono- oder Dibutylaminosulfonylamino oder (N-Methyl-N-ethylaminosulfonyl)amino.

Reste Z⁶ sind weiterhin, z.B. Fluor, Chlor, Brom, Benzyl, 2-Methylbenzyl, 2,4-Dimethylbenzyl, 2-Methoxybenzyl, 2,4-Dimethoxybenzyl, Methylamino, Ethylamino, Propylamino, Isopropylamino, Butylamino, Pentylamino, Hexylamino, Heptylamino, Octylamino, 2-Ethylhexylamino, Methylthio, Ethylthio, Propylthio, Isopropylthio oder Butylthio.

Reste R⁵, Z¹, Z² und Z⁶ sind weiterhin z.B. Methoxy, Ethoxy, Propoxy, Isopropoxy, Butoxy, Isobutoxy, sec-Butoxy oder tert-Butoxy.

Wenn Z³ und Z⁴ zusammen mit dem sie verbindenden Stickstoffatom einen 5- oder 6-gliedrigen gesättigten heterocyclischen Rest, der gegebenenfalls weitere Heteroatome aufweist, bedeuten, so können dafür z.B. Pyrrolidinyl, Piperidinyl, Morpholinyl, Piperazinyl oder N-(C₁-C₄-Alkyl)piperazinyl in Betracht kommen.

Reste R⁶ sind z.B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Bevorzugt sind Pyridonfarbstoffe der Formel I, in der R⁶ Cyano bedeutet.

Weiterhin bevorzugt sind Pyridonfarbstoffe der Formel I, in der R⁵ C₁C₅-Alkyl oder Phenyl bedeutet.

Weiterhin bevorzugt sind Pyridonfarbstoffe der Formel I, in der R¹ C₁C₁₃-Alkyl, das gegebenenfalls durch C₁-C₆-Alkanoyloxy, C₁-C₈-Alkoxycarbonyl, dessen Alkylkette durch 1 oder 2 Sauerstoffatome in Etherfunktion unterbrochen sein kann, Phenyl oder C₁-C₄-Alkylphenyl substituiert ist und durch 1 oder 2 Sauerstoffatome in Etherfunktion unterbrochen sein kann, bedeutet.

Insbesondere bevorzugt sind Pyridonfarbstoffe der Formel I, in der R¹ Alkyl, Alkoxyalkyl, Alkanoyloxyalkyl oder Alkoxycarbonylalkyl, wobei diese Reste jeweils bis zu 12 Kohlenstoffatome aufweisen, oder gegebenenfalls durch Methyl substituiertes Benzyl bedeutet.

Weiterhin insbesondere bevorzugt sind Pyridonfarbstoffe der Formel I, in der R² einen Rest der obengenannten Formel IIa, IIc, IIg oder IIi, wobei ein Rest der Formel IIa oder IIi besonders zu nennen ist, bedeutet, worin
- Z¹: für Wasserstoff, C₁-C₄-Alkyl, C₁-C₄-Alkoxy oder C₁-C₈-Alkanoylamino,
- Z²: für Wasserstoff, Methyl, Methoxy oder Ethoxy,
- Z³ und Z⁴: unabhängig voneinander jeweils für Alkyl, Alkoxyalkyl, Alkanoyloxyalkyl oder Alkoxycarbonylalkyl, wobei diese Reste jeweils bis zu 12 Kohlenstoffatome aufweisen, Wasserstoff, gegebenenfalls durch Methyl substituiertes Benzyl oder Phenyl und
- Z⁶: für Wasserstoff, C₁-C₈-Alkyl, gegebenenfalls durch C₁-C₄-Alkyl oder C₁-C₄-Alkoxy substituiertes Phenyl, Benzyl oder Thienyl stehen.

Die erfindungsgemäßen Farbstoffe der Formel I können nach an sich bekannten Methoden hergestellt werden.

Beispielsweise können sie durch Kondensation von Aldehyden der Formel III

R²⁻CHO (III),

in der R² die obengenannte Bedeutung besitzt mit Pyridonen der Formel IV 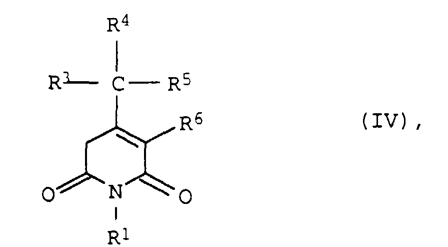 worin R¹, R³, R⁴, R⁵ und R⁶ jeweils die obengenannte Bedeutung besitzen, erhalten werden.

Es ist jedoch auch möglich, die neuen Farbstoffe der Formel I auf dem aus der WO-A-95/21219 bekannten Weg herzustellen. So kann man beispielsweise eine Verbindung der Formel VII 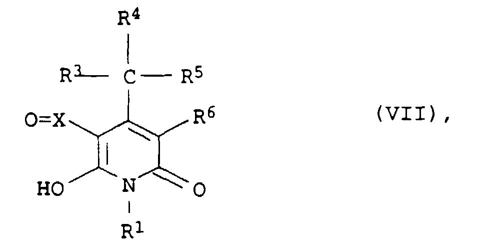 in denen X, R¹, R³, R⁴, R⁵ und R⁶ jeweils die obengenannte Bedeutung besitzen, mit einer Verbindung der Formel VIII

R²-H (VIII),

in der R² die obengenannte Bedeutung besitzt, kondensieren.

Die Herstellung der Pyridone der Formel IV kann nach an sich bekannten Methoden geschehen. Beispielsweise kann man ein Cyanacetamid der Formel IX

NC-CH₂-CO-NHR¹ (IX),

in der R¹ die obengenannte Bedeutung besitzt, in basischem Milieu, z.B. in einer Lösung eines Alkali-C₁-C₄-Alkanolats in einem C₁-C₄-Alkanol, mit einem Ester der Formel X 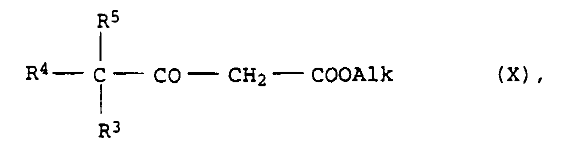 in der R³, R⁴ und R⁵ jeweils die obengenannte Bedeutung besitzen und Alk C₁-C₄-Alkyl bedeutet, kondensieren.

Ein weiterer Gegenstand der vorliegenden Erfindung ist ein Verfahren zur Übertragung von Farbstoffen von einem Träger auf ein mit Kunststoff beschichtetes Papier durch Diffusion oder Sublimation mit Hilfe einer Energiequelle, das dadurch gekennzeichnet ist, daß man einen Träger verwendet, auf dem sich ein oder mehrere Pyridonfarbstoffe der Formel I befinden.

Zur Herstellung der für das erfindungsgemäße Verfahren benötigten Farbstoffträger werden die Farbstoffe der Formel I in einem geeigneten organischen Lösungsmittel oder in Mischungen von Lösungsmitteln mit einem oder mehreren Bindemitteln, gegebenenfalls unter Zugabe von Hilfsmitteln zu einer Druckfarbe verarbeitet. Diese enthält die Farbstoffe der Formel I vorzugsweise in molekular-dispers gelöster Form. Die Druckfarbe kann mittels einer Rakel auf den inerten Träger aufgetragen und die Färbung z.B. an der Luft oder mit einem Föhn getrocknet werden. Geeignete organische Lösungsmittel für die Farbstoffe der Formel I sind z.B. solche, in denen die Löslichkeit der Farbstoffe der Formel I bei einer Temperatur von 20°C größer als 1 Gew.-%, vorzugsweise größer als 5 Gew.-% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und die die Farbstoffe an den inerten Träger abriebfest zu binden vermögen. Dabei werden solche Bindemittel bevorzugt, die die Farbstoffe nach Trocknung der Druckfarbe an der Luft in Form eines klaren, transparenten Films aufnehmen, ohne das dabei eine sichtbare Auskristallisation der Farbstoffe auftritt.

Solche Bindemittel sind beispielsweise in der US-A-5 132 438 oder in den entsprechenden dort zitierten Patentanmeldungen genannt. Darüber hinaus sind gesättigte lineare Polyester zu nennen.

Bevorzugte Bindemittel sind Ethylcellulose, Ethylhydroxyethylcellulose, Polyvinylbutyral, Polyvinylacetat, Cellulosepropionat oder gesättigte lineare Polyester.

Das Gewichtsverhältnis Bindemittel : Farbstoff beträgt im allgemeinen 1: 1 bis 10 : 1.

Als Hilfsmittel kommen z.B. Trennmittel in Betracht, wie sie in der US-A-5 132 438 oder den entsprechenden dort zitierten Patentanmeldungen genannt sind. Darüber hinaus sind besonders organische Additive zu nennen, welche das Auskristallisieren der Transferfarbstoffe bei Lagerung oder beim Erhitzen des Farbbandes verhindern, z.B. Cholesterin oder Vanillin.

Geeignete inerte Träger sind z.B. in der US-A-5 132 438 oder in den entsprechenden dort zitierten Patentanmeldungen beschrieben. Die Dicke des Trägers beträgt im allgemeinen 3 bis 30 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Weitere Einzelheiten dazu können z.B. aus der US-A-5 132 438 oder den entsprechenden dort zitierten Patentanmeldungen entnommen werden.

Die Übertragung erfolgt mittels einer Energiequelle, z.B. mittels eines Lasers oder eines Thermokopfes, wobei letzterer auf eine Temperatur von ≥ 300°C aufheizbar sein muß, damit der Farbstofftransfer im Zeitbereich t: 0 < t < 15 ms erfolgen kann. Dabei migriert der Farbstoff aus dem Transferblatt und diffundiert in die Oberflächenbeschichtung des Aufnahmemediums.

Die erfindungsgemäßen Farbstoffe der Formel I zeichnen sich beim Farbstofftransfer durch vorteilhafte anwendungstechnische Eigenschaften aus. Sie weisen eine hohe Löslichkeit im Farbband (gute Kompatibilität mit dem Bindemittel), eine hohe Stabilität in der Druckfarbe, eine gute Transferierbarkeit, eine hohe Bildstabilität (d.h. gute Lichtechtheit sowie gute Stabilität gegenüber Umwelteinflüssen, z.B. Feuchtigkeit, Temperatur oder Chemikalien) auf und erlauben eine flexible coloristische Anpassung an bereits vorgegebene subtraktive Grundfarben im Sinne einer optimalen Trichromie (höchstmögliche Brillanz von Grund- oder Mischfarben und tiefes neutrales Schwarz).

Die erfindungsgemäßen Pyridonfarbstoffe der Formel I eignen sich ebenfalls in vorteilhafter Weise zum Färben oder Bedrucken von synthetischen Materialien. Synthetische Materialien sind, z.B. Polyester, Polyamide oder Polycarbonate. Insbesondere zu nennen sind Materialien in textiler Form, wie Fasern, Garne, Zwirne, Maschenware, Webware oder Non-wovens aus Polyester, modifiziertem Polyester, z.B. anionisch modifiziertem Polyester, Mischgewebe von Polyester mit Cellulose, Baumwolle, Viskose oder Wolle, oder Polyamid. Die Färbe- und Druckbedingungen, die auch das Färben in überkritischem Kohlendioxid einschließen, sind an sich bekannt.

Vorteilhaft eignen sich die neuen Pyridonfarbstoffe auch zum Bedrucken von Materialien mittels des Ink-Jet-Verfahrens. Geeignete Substrate sind dabei neben den oben genannten, z.B. Papier, Glas, Keramik, Kunststoffe oder Metalle.

Die erfindungsgemäßen Farbstoffe können auch zum Färben von keratinischen Fasern, z.B. bei der Haarfärbung oder der Färbung von Pelzen, verwendet werden.

Die neuen Farbstoffe der Formel I eignen sich weiterhin vorteilhaft für die Herstellung von Farbfiltern, wie sie z.B. in der EP-A-399 473 beschrieben sind.

Schließlich können sie auch vorteilhaft als Farbmittel für die Herstellung von Tonern für die Elektrophotographie verwendet werden.

Die folgenden Beispiele sollen die Erfindung näher erläutern.

### A) Herstellung

### Beispiel 1

a) 788 ml Cyanessigsäuremethylester wurden bei maximal 30°C in 555 g 40 gew.-%ige wäßrige Methylaminlösung getropft. Das Reaktionsgemisch wurde über Nacht bei 20°C gerührt. Danach wurde auf 0 bis 5°C abgekühlt und der gebildete Niederschlag abgesaugt und mit Ethanol gewaschen. Man trocknet bei 50°C unter vermindertem Druck und erhielt 478,8 g Cyanessigsäure-N-methylamid (Fp.: 99°C).
b) Zu einer Lösung von 19,6 Cyanessigsäure-N-methylamid in 100 ml Isopropanol tropfte man bei 40 bis 45°C 26 g Propionylessigsäuremethylester. Danach tropfte man 43 g 30 gew.-%ige methanolische Natriummethanolatlösung zu und rührte 3 h bei 45°C und anschließend über Nacht bei 20°C. Man destillierte dann das Lösungsmittel ab, gab Methyl-tert-butylether zu, saugte den gebildeten Niederschlag ab, wusch mit Diethylether und trocknete. Man erhielt 37,5 g des Pyridons der Formel 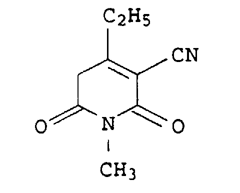
c) 4,45 g des unter b) beschriebenen Pyridons und 8,14 g 2-Dibutylamino-4-phenyl-5-formylthiazol (97 gew.-%ig) wurden in 15 ml Acetanhydrid 15 min bei 140°C erhitzt. Nach dem Abkühlen wurde der gebildete Niederschlag abgesaugt, mit wenig Methanol gewaschen und über Kieselgel säulenchromatographisch gereinigt (Laufmittel: Toluol:Ethylacetat 8:2 v/v). Man erhielt 1,54 g des Farbstoffs der Formel 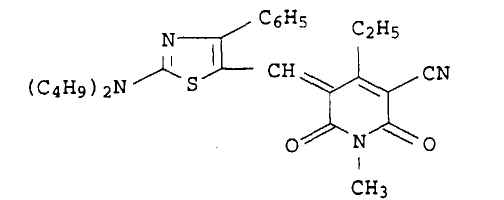 (Fp.: 183°C; λₘₐₓ (in CH₂Cl₂): 535 nm)

### Beispiel 2

Man verfuhr analog Beispiel 1, verwendete jedoch in Stufe b) anstelle von Propionylessigsäuremethylester Isobutyrylessigsäuremethylester und erhielt 2,05 g des Farbstoffs der Formel 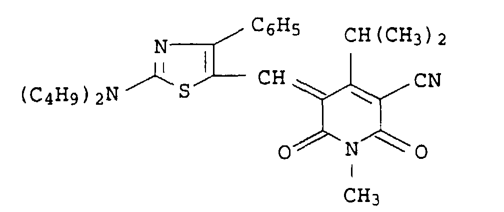 (Fp.: 200 bis 207°C; λₘₐₓ (in CH₂Cl₂): 534 nm)

In analoger Weise werden die in den folgenden Tabellen 1 und 2 aufgeführten Farbstoffe erhalten.

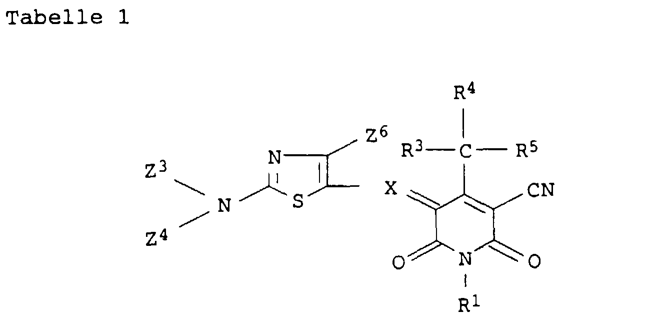

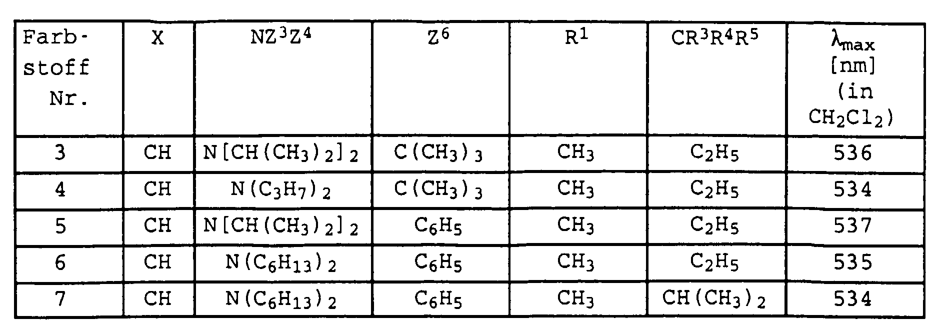

### B) Farbtransfer

a) 10 g Farbstoff werden, gegebenenfalls unter kurzzeitigem Erwärmen auf 80 bis 90°C, in 100 g einer 10 gew.%igen Lösung eines Bindemittels in ein Methylethylketon/Toluol/ Cyclohexanon-Gemisch (4,5:2:2 v/v/v) eingerührt.
   Die resultierende Druckfarbe wird mit einer 6 µm Rakel auf eine Polyesterfolie von 6 µm Dicke, auf deren Rückseite eine geeignete Gleitschicht aufgebracht ist, aufgerakelt und mit einem Föhn 1 Minute trockengeblasen. Bevor das Farbband verdruckt werden kann, muß es mindestens 24 Stunden an der Luft nachtrocknen, da Restlösungsmittel den Druckvorgang beeinträchtigen können.
b) Die Farbbänder werden auf einer rechnergesteuerten Versuchsanordnung, die mit einem handelsüblichen Thermokopf ausgestattet ist, auf handelsüblichem Videoprintpapier (Typ VY-S der Fa. Hitachi) verdruckt.
   Durch Veränderung der Spannung wird die Energieabgabe des Thermokopfs gesteuert, wobei die eingestellte Impulsdauer 7ms beträgt und immer nur ein Impuls abgegeben wird. Die abgegebene Energie liegt zwischen 0,7 und 2,0 mJ/Dot.
   Da die Höhe der Anfärbung direkt proportional der zugeführten Energie ist, kann ein Farbkeil erzeugt und spektroskopisch ausgewertet werden.
   Aus der graphischen Auftragung der Farbtiefe gegen die zugeführte Energie je Heizelement wird der Q*-Wert (= Energie in mJ für den Extinktionswert 1) ermittelt.

Die erhaltenen Ergebnisse sind in der folgenden Tabelle 2 aufgeführt.

(Bei den Angaben von Q* und m bezieht sich der erste Wert jeweils auf ein Bindemittel auf Basis von Polyester, der zweite jeweils auf ein Bindemittel auf Basis von Polyvinylbutyral.)

**Tabelle 2**

| Farbstoff Nr. | Q* [mJ/Dot] | m [1/mJ] |
|---|---|---|
| 1 | 0,87 0,92 | 3,00 2,40 |
| 2 | 0,85 0,90 | 3,36 2,73 |
| 3 | 0,76 0,81 | 5,69 4,29 |
| 4 | 0,71 0,75 | 3,83 3,74 |
| 5 | 0,92 | 3,02 |
| 6 | 0,91 | 2,39 |
| 7 | 0,82 0,89 | 3,43 2,79 |

Die folgende Tabelle 3 zeigt einen Vergleich der anwendungstechnischen Eigenschaften des Farbstoffs Nr. 3 mit dem bekannten Farbstoff Nr. 8 der Formel

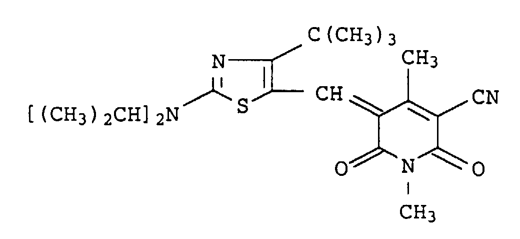

**Tabelle 3**

| Farbstoff Nr. | Q* [mJ/Dot] | m [1/m] | LE | TS |
|---|---|---|---|---|
| 3 | 0,76 0,81 | 5,69 4,29 | 29 | 1 |
| 8 | 0,79 0,82 | 3,35 2,97 | 12 | 2 |

Als Wert für die Beurteilung der Lichtechtheit (LE) ist die Anzahl der Bestrahlungstunden angegeben, nach der 20 % der ursprünglich vorhandenen Farbstoffmenge auf den ungetemperten Drukken zerstört war. Die thermische Stabilität (TS) wird durch Lagern der ungetemperten Drucke im Trockenschrank (1 Woche bei 70°C) bestimmt. Sie wird durch Noten beurteilt, die von 1 bis 6 reichen. Die Note 1 steht für sehr gut, die Note 6 für ungenügend. (Auch hier bezieht sich der erste Wert jeweils auf ein Bindemittel auf Basis von Polyester, der zweite jeweils auf ein Bindemittel auf Basis von Polyvinylbutylral.)

Ein Vergleich des Farbstoffs Nr. 5 mit dem bekannten Farbstoff Nr. 9 der Formel 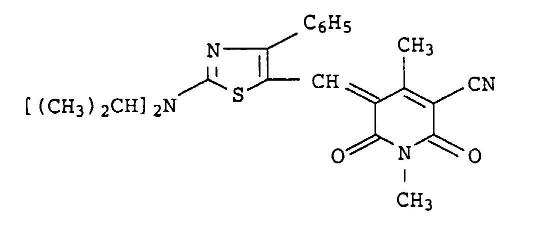 konnte nicht durchgeführt werden, da der Farbstoff Nr. 9 schwerlöslich und nicht kompatibel mit den Bindemitteln ist.

## Patentansprüche

1. Pyridonfarbstoffe der Formel I 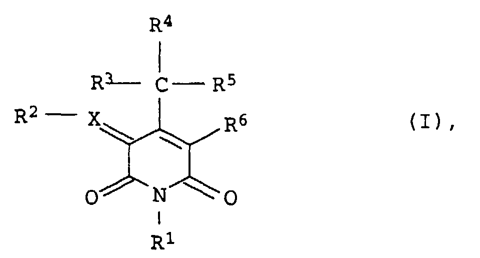 in der
X CH,
R¹ C₁-C₂₀-Alkyl, das gegebenenfalls substituiert ist und durch 1 bis 4 Sauerstoffatome in Etherfunktion unterbrochen sein kann, oder gegebenenfalls substituieres Phenyl,
R² einen 5- oder 6-gliedrigen carbocyclischen oder heterocyclischen Rest, der benzoanelliert sein kann,
R³ Wasserstoff oder C₁-C₄-Alkyl,
R⁴ Wasserstoff oder C₁-C₄-Alkyl,
R⁵ C₁-C₈-Alkyl, das gegebenenfalls durch 1 oder 2 Sauerstoffatome in Etherfunktion unterbrochen ist und durch Phenyl oder Hydroxy substituiert sein kann, oder gegebenenfalls substituiertes Phenyl und
R⁶ Cyano, Carbamoyl, Carboxyl, C₁-C₄-Alkoxycarbonyl oder C₁-C₄-Alkanoyl bedeuten.

2. Pyridonfarbstoffe nach Anspruch 1, dadurch gekennzeichnet, daß R⁶ Cyano bedeutet.

3. Pyridonfarbstoffe nach Anspruch 1, dadurch gekennzeichnet, daß R⁵ C₁-C₅-Alkyl oder Phenyl bedeutet.

4. Pyridonfarbstoffe nach Anspruch 1, dadurch gekennzeichnet, daß R¹ C₁-C₁₃-Alkyl, das gegebenenfalls durch C₁-C₆-Alkanoyloxy, C₁-C₈-Alkoxycarbonyl, dessen Alkylkette durch 1 oder 2 Sauerstoffatome in Etherfunktion unterbrochen sein kann, Phenyl oder C₁-C₄-Alkylphenyl substituiert ist und durch 1 oder 2 Sauerstoffatome in Etherfunktion unterbrochen sein kann, bedeutet.

5. Pyridonfarbstoffe nach Anspruch 1, dadurch gekennzeichnet, daß R² sich von einer Komponente aus der Benzol-, Indol-, Chinolin-, Naphthalin-, Pyrrol-, Thiazol-, Benzimidazol-, Benzthiazol-, Thiophen- oder Diaminopyridinreihe ableitet.

6. Verfahren zur Übertragung von Farbstoffen von einem Träger auf ein mit Kunststoff beschichtetes Papier durch Diffusion oder Sublimation mit Hilfe einer Energiequelle, dadurch gekennzeichnet, daß man einen Träger verwendet, auf dem sich ein oder mehrere Pyridonfarbstoffe der Formel I gemäß Anspruch 1 befinden.

7. Verwendung der Pyridonfarbstoffe gemäß Anspruch 1 zum Färben oder Bedrucken von synthetischen Materialien.

## Claims

1. Pyridone dyes of the formula I 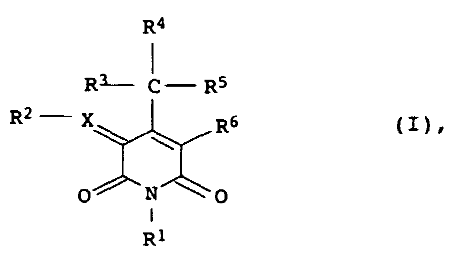 where
X is CH,
R¹ is C₁-C₂₀-alkyl with or without substitution and with or without interruption by from 1 to 4 oxygen atoms in ether function or is substituted or unsubstituted phenyl,
R² is a 5- or 6-membered carbocyclic or heterocyclic radical with or without benzofusion,
R³ is hydrogen or C₁-C₄-alkyl,
R⁴ is hydrogen or C₁-C₄-alkyl,
R⁵ is C₁-C₈-alkyl with or without interruption by 1 or 2 oxygen atoms in ether function and with or without phenyl or hydroxyl substitution, or is substituted or unsubstituted phenyl, and
R⁶ is cyano, carbamoyl, carboxyl, C₁-C₄-alkoxycarbonyl or C₁-C₄-alkanoyl.

2. Pyridone dyes as claimed in claim 1, wherein R⁶ is cyano.

3. Pyridone dyes as claimed in claim 1, wherein R⁵ is C₁-C₅-alkyl or phenyl.

4. Pyridone dyes as claimed in claim 1, wherein R¹ is C₁-C₁₃-alkyl with or without substitution by C₁-C₆-alkanoyloxy, C₁-C₈-alkoxycarbonyl with or without interruption in the alkyl chain by 1 or 2 oxygen atoms in ether function, phenyl or C₁-C₄-alkylphenyl and with or without interruption by 1 or 2 oxygen atoms in ether function.

5. Pyridone dyes as claimed in claim 1, wherein R² is derived from a component of the benzene, indole, quinoline, naphthalene, pyrrole, thiazole, benzimidazole, benzothiazole, thiophene or diaminopyridine series.

6. A process for transferring dyes from a transfer to a polymer-coated paper by diffusion or sublimation with the aid of an energy source, which comprises using a transfer comprising one or more pyridone dyes of the formula I as set forth in claim 1.

7. The use of the pyridone dyes of claim 1 for dyeing or printing synthetic materials.

## Revendications

1. Colorant pyridonique de formule I 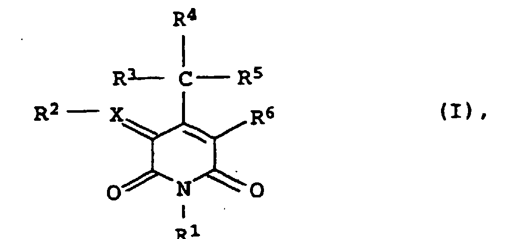 dans laauelle
X représente CH,
R¹ représente un groupement alkyle en C₁-C₂₀, éventuellement substitué et pouvant être interrompu par 1 à 4 atomes d'oxygène en fonction éther, ou bien un groupement phényle éventuellement substitué,
R² représente un reste hétérocyclique ou carbocyclique à 5 ou 6 maillons, pouvant être benzocondensé,
R³ représente un atome d'hydrogène ou un groupement alkyle en C₁-C₄,
R⁴ représente un atome d'hydrogène ou un groupement alkyle en C₁-C₄,
R⁵ représente un groupement alkyle en C₁-C₈, pouvant être interrompu par 1 ou 2 atomes d'oxygène en fonction éther et pouvant être substitué par des groupements phényle ou hydroxy, ou bien un groupement phényle éventuellement substitué et
R⁶ représente un groupement cyano, carbamoyle, carboxyle, alcoxycarbonyle en C₁-C₄, ou alcanoyle en C₁-C₄.

2. Colorant pyridonique selon la revendication 1, caractérisé en ce que R⁶ représente un groupement cyano.

3. Colorant pyridonique selon la revendication 1, caractérisé en ce que R⁵ représente un groupement alkyle en C₁-C₅ ou phényle.

4. Colorant pyridonique selon la revendication 1, caractérisé en ce que R¹ représente un groupement alkyle en C₁-C₁₃, pouvant être substitué par des groupements alcanoyloxy en C₁-C₆, alcoxycarbonyle en C₁-C₈, dont la chaîne alkyle peut être interrompue par 1 ou 2 atomes d'oxygène en fonction éther, par des groupements phényle ou (alkyle en C₁-C₄)phényle et pouvant être interrompu par 1 ou 2 atomes d'oxygène en fonction éther.

5. Colorant pyridonique selon la revendication 1, caractérisé en ce que R² dérive d'un composant de la série du benzène, de l'indole, de la quinoléine, du naphtalène, du pyrrole, du thiazole, du benzimidazole, du benzothiazole, du thiophène ou de la diaminopyridine.

6. Procédé de transfert de colorants d'un support sur un papier enduit de matière plastique, par diffusion ou sublimation, à l'aide d'une source d'énergie, caractérisé en ce que l'on utilise un support sur lequel se trouvent un ou plusieurs colorants pyridoniques de formule I selon la revendication 1.

7. Utilisation de colorants pyridoniques selon la revendication 1 pour la coloration ou l'impression de matières synthétiques.
